# EUROPEAN PATENT APPLICATION

(11) **EP 2 858 331 A1**
(43) Date of publication of application: **08.04.2015**
(21) Application number: 14183399.6
(22) Date of filing: 03.09.2014
(51) Int. Cl.: H04L 29/08

(54) **Explicit and implicit triggers for creating new place data**

(30) Priority: 02.10.2013 US 201314044225
(71) Applicant: BlackBerry Limited, Waterloo, ON N2K 0A7 (CA)
(72) Inventor: Ngo, Ngoc Bich, Kanata, Ontario K2K 3K1 (CA)
(74) Representative: Patel, Binesh

(57) **Abstract**

A method, performed by a mobile device, of creating place data, the method comprising receiving a place-marking trigger by the mobile device, in response to the trigger, determining current location data for a current location of the mobile device, determining if the current location corresponds to a place for which place data already exists in a place data store, if the place data store does not contain any place data corresponding to the current location, creating new place data for the place corresponding to the current location, and transferring the place data to the place data store.

## Description

### TECHNICAL FIELD

The present technology relates generally to mobile devices and, in particular, to creating place data using mobile devices.

### BACKGROUND

Mobile devices or wireless communications devices may be used to create or save location-specific data for storing, sharing, uploading or for other uses. The location-specific data may be geo-tagged automatically using GPS coordinates, a WPS-determined location, user input, or other sources. Conventionally, the marking of a location requires inconvenient user input such as accessing a dropdown menu to send a location or save a location. More efficient and ergonomic techniques are therefore required to create place data.

### BRIEF DESCRIPTION OF THE DRAWINGS

Further features and advantages of the present technology will become apparent from the following detailed description, taken in combination with the appended drawings, in which:
FIG. 1 is a depiction of a mobile device on which the present technology may be implemented, the depiction including a schematic depiction of some components of the mobile device;
FIG. 2 is a depiction of a system for creating places in a place database using a mobile device;
FIG. 3 is a flowchart of a method of creating new place data in response to a place-marking trigger received by the mobile device in accordance with an embodiment of the present invention;
FIG. 4 is a depiction of a mobile device creating new place data in response to a photograph being taken by a digital camera on the mobile device;
FIG. 5 is a depiction of a mobile device creating new place data in response to a voice command received by the mobile device;
FIG. 6 is a depiction of a mobile device creating new place data in response to a predetermined gesture recognized by the mobile device;
FIG. 7 is a depiction of a mobile device displaying a map of the current location of the mobile device; and
FIG. 8 is a depiction of a mobile device displaying a list of potential new places for which new place data may be created.
It will be noted that throughout the appended drawings, like features are identified by like reference numerals.

### DETAILED DESCRIPTION

The present technology relates in general to techniques for creating place data in response to a trigger that is either explicit or implicit. Explicit triggers (e.g. voice commands, gestures, keys, key combinations) are recognized by the device as a command to create the new place in the database. Implicit triggers (capturing a photo or video, creating a voice memo, viewing a search result, viewing a map location, making a call, sending a text message, making a mobile payment, etc.) are inferred by the device as suggesting that the user may wish to create new place data for the place. Other implicit triggers may involve observing a context in which a user provides explicit triggers, extracting content from messages sent by the device, determining if the device is visiting a new geographical area, and recognizing a landmark in a photo or video captured using the device. Once place data is created, it may be stored, shared, and/or uploaded for further processing or use.

Accordingly, one aspect of the present technology is a method, performed by a mobile device, of creating place data. The method entails detecting an explicit or implicit place-marking trigger by the mobile device. In response to the trigger, the device determines current location data for a current location of the mobile device, determines if the current location corresponds to a place for which place data already exists in a place data store. If the place data store does not contain any place data corresponding to the current location, the device creates new place data for the place corresponding to the current location. If the place data store does contain some place data corresponding to the current location, the place data may be updated, corrected or supplemented. The device then transfers the new or updated place data to the place data store.

Another aspect of the present technology is a computer-readable medium comprising instructions in code which when loaded into a memory and executed by a processor of a mobile device cause the mobile device to computer-readable medium comprising instructions in code which when loaded into a memory and executed by a processor of a mobile device cause the mobile device to detect an explicit or implicit place-marking trigger by the mobile device, in response to the trigger, determine current location data for a current location of the mobile device, determine if the current location corresponds to a place for which place data already exists in a place data store, if the place data store does not contain any place data corresponding to the current location, create new place data for the place corresponding to the current location. If the place data store does contain some place data corresponding to the current location, the place data may be updated, corrected or supplemented. The device then transfers the new or updated place data to the place data store.

Another aspect of the present technology is a mobile device mobile device having a user interface for detecting an explicit or implicit place-marking trigger, a processor operatively coupled to the memory for causing, in response to the trigger, a position-determining subsystem to determine a current location of the mobile device, the processor being configured to determine if the current location corresponds to a place for which place data already exists in a place data store and, if the place data store does not contain any place data corresponding to the current location, to create new place data for the place corresponding to the current location and to transfer the place data to the place data store. If the place data store does contain some place data corresponding to the current location, the place data may be updated, corrected or supplemented and then transferred to the place data store.

The details and particulars of these aspects of the technology will now be described below, by way of example, with reference to the drawings.

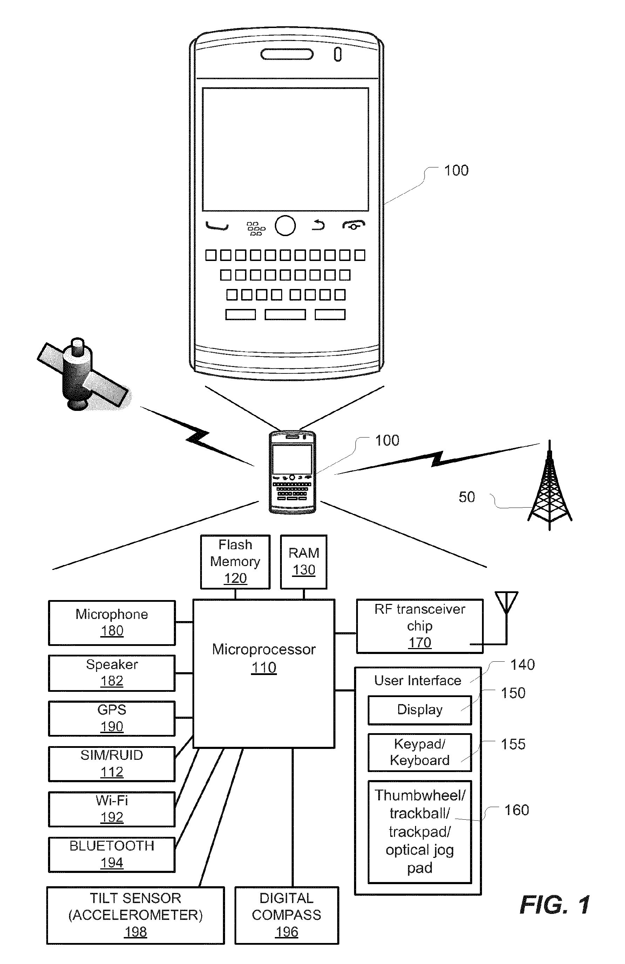

FIG. 1 is a depiction of a wireless communications device as one example of a mobile device that may be used to implement this novel technology. Examples of a mobile device or wireless communications device include cell phones, smart phones, mobile phones, portable digital assistants, or any other such portable or handheld electronic communications devices.

As shown by way of example in FIG. 1, the mobile device, which is generally designated by reference numeral 100, includes a processor 110 and memory 120, 130 for executing one or more applications. The memory may include flash memory 120 and/or random access memory (RAM) 130. Other types or forms of memory may be used.

As depicted by way of example in FIG. 1, the mobile device 100 includes a user interface 140 for interacting with the mobile device and its applications and, in this instance, for receiving user input to set up a call to another device. The user interface 140 may include one or more input/output devices, such as a display screen 150 (e.g. an LCD or LED screen or touch-sensitive display screen), and a keyboard or keypad 155. The user interface may also include an optical jog pad 160 and/or a thumbwheel, trackball, track pad or equivalent.

As depicted by way of example in FIG. 1, the mobile device 100 may include a wireless transceiver 170 for communicating with other devices. The transceiver 170 may be a radiofrequency (RF) transceiver for wirelessly communicating with one or more base stations 50 over a cellular wireless network using cellular communication protocols and standards for both voice calls and packet data transfer such as GSM, CDMA, GPRS, EDGE, UMTS, LTE, etc. Where the computing device 100 is a wireless communications device, the device may include a Subscriber Identity Module (SIM) card 112 for GSM-type devices or a Re-Usable Identification Module (RUIM) card for CDMA-type devices. The RF transceiver 170 may include separate voice and data channels.

The mobile device 100 may optionally include one or more ports or sockets for wired connections, e.g. USB, HDMI, FireWire (IEEE 1394), etc. or for receiving non-volatile memory cards, e.g. SD (Secure Digital) card, miniSD card or microSD card.

For voice calls, the mobile device 100 includes a microphone 180, a speaker 182 and/or an earphone jack. Optionally, the device may include a speech-recognition subsystem for transforming voice input in the form of sound waves into an electrical signal. The electrical signal is then processed by a speech-recognition module (digital signal processor) to determine voice commands from the voice input. Voice commands may be used to initiate a call and to select the call recipient from an address book.

Optionally, the mobile device 100 includes a positioning subsystem such as a Global Positioning System (GPS) receiver 190 (e.g. in the form of a chip or chipset) for receiving GPS radio signals transmitted from one or more orbiting GPS satellites. References herein to "GPS" are meant to include Assisted GPS and Aided GPS. Although the present disclosure refers expressly to the "Global Positioning System", it should be understood that this term and its abbreviation "GPS" are being used expansively to include any satellite-based navigation-signal broadcast system, and would therefore include other systems used around the world including the Beidou (COMPASS) system being developed by China, the multi-national Galileo system being developed by the European Union, in collaboration with China, Israel, India, Morocco, Saudi Arabia and South Korea, Russia's GLONASS system, India's proposed Regional Navigational Satellite System (IRNSS), and Japan's proposed QZSS regional system.

Another sort of positioning subsystem may be used as well, e.g. a radiolocation subsystem that determines its current location using radiolocation techniques, as will be elaborated below. In other words, the location of the device can be determined using triangulation of signals from in-range base towers, such as used for Wireless E911. Wireless Enhanced 911 services enable a cell phone or other wireless device to be located geographically using radiolocation techniques such as (i) angle of arrival (AOA) which entails locating the caller at the point where signals from two towers intersect; (ii) time difference of arrival (TDOA), which uses multilateration like GPS, except that the networks determine the time difference and therefore the distance from each tower; and (iii) location signature, which uses "fingerprinting" to store and recall patterns (such as multipath) which mobile phone signals exhibit at different locations in each cell. A Wi-Fi™ Positioning System (WPS) may also be used as a positioning subsystem. Radiolocation techniques and/or WPS may also be used in conjunction with GPS in a hybrid positioning system.

Optionally, the mobile device 100 may include a Wi-Fi™ transceiver 192, a Bluetooth® transceiver 194, and/or a near-field communications (NFC) chip. The mobile device 100 may also optionally include a transceiver for WiMax^{™} (IEEE 802.16), a transceiver for ZigBee® (IEEE 802.15.4-2003 or other wireless personal area networks), an infrared transceiver or an ultra-wideband transceiver.

Optionally, the mobile device may include other sensors like a digital compass 196 and/or a tilt sensor or accelerometer 198.

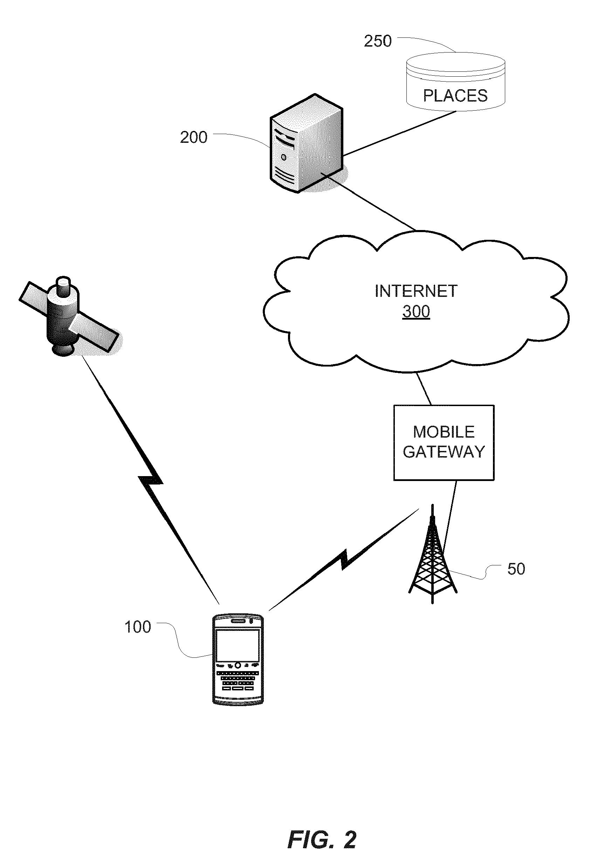

The mobile device 100 as shown by way of example in FIG. 1 may be used to create place data in response to explicit or implicit triggers. The place data may be stored in a place database which may reside in the memory 120, 130 of the device 100 or on a places server 200 that is accessible by the mobile device as shown in the system depicted by way of example in FIG. 2.

As shown in FIG. 2, the device 100 may communicate new place data to the places server 200. The data may be communicated wirelessly from the mobile device 100 to the server 200 via a wireless network that includes a base station 50. The data is transmitted via a mobile gateway to the Internet 300 where the data is forwarded as packets using TCP/IP to the places server 200. The server 200 may host the places database in its own memory and/or it may employ a separate places database 250 as illustrated by way of example in FIG. 2.

From the foregoing, it should be understood that place data may be created in response to explicit or implicit triggers. This data may then be stored locally in a memory of the mobile device and/or uploaded and stored to an external place data store, e.g. a centralized places database or a distributed database (server cluster, server farm, cloud storage, etc.)

Creating place data, for the purposes of this disclosure, means creating place-related data for a place for which place data is currently nonexistent in the place data store. Creating place data may also include creating new data for an already existent place.

For the purposes of this disclosure, place data (or place-related data) is data, e.g. computer-readable code, that represents place-related information or place-related content that describes a place. The place-related content and information may be text, maps, photos, video, audio files, or other data. The place-related information and content is thus a multi-faceted description of the place. One element of this description is the location of the place, which may be characterized by location data, such as for example location coordinates, a street address, etc. Thus, the place data encompasses the location data for the place but may also include other data describing the place.

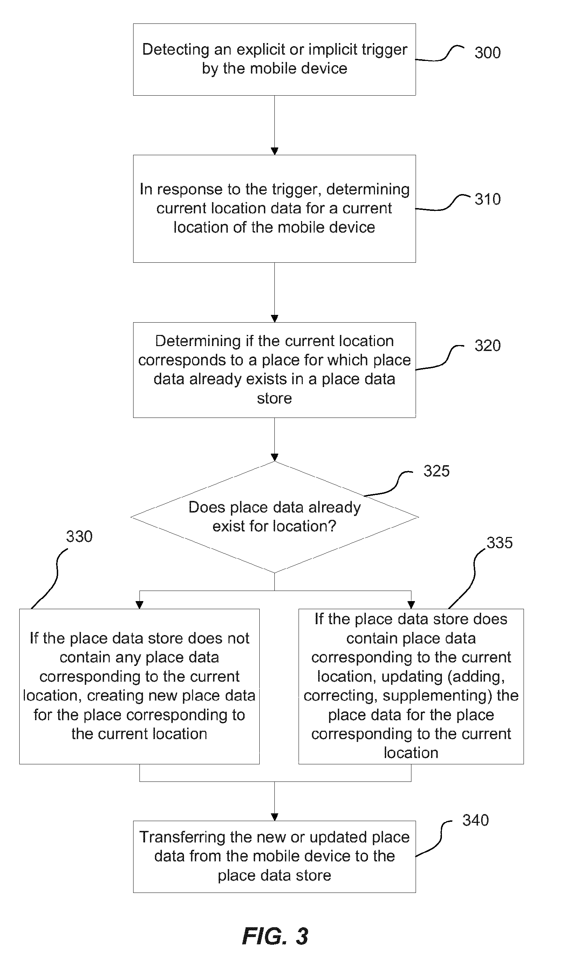

FIG. 3 is a flowchart that presents an overview of the main steps, acts or operations of a method of creating new place data using explicit or implicit triggers. The method of creating place data is performed by a mobile device although it may also be wholly or partially performed by, or in conjunction with, another connected device, server, computer, or computing device. As depicted in FIG. 3, the method entails a step 300 of detecting an explicit or implicit place-marking trigger by the mobile device. In response to the explicit or implicit trigger, the method includes a step 310 of determining current location data for a current location of the mobile device. The method further includes a step 320 of determining if the current location corresponds to a place for which place data already exists in a place data store. At step 325, a decision is made as to whether place data already exists for the location. If the place data store does not contain any place data corresponding to the current location, the method proceeds to perform a step 330 of creating new place data for the place corresponding to the current location, and a step 340 of transferring the place data to the place data store. If place data (or at least some place data) already exists for the location, the method proceeds to perform step 335 of updating the place data for the place. Updating may involve adding to, supplementing, correcting, deleting, etc. In some implementations, the place data is transferred from the mobile device to a place data store external to the mobile device. In other implementations the place data store resides in the memory of the mobile device, in which case the data is transferred from one memory sector (e.g. from a temporary cache or from volatile memory) to another more permanent memory sector (e.g. a data file or folder in the ROM or other non-volatile memory).

The place-marking trigger may be an explicit trigger or an implicit trigger. The trigger causes the device to create new place or to output a suggestion to the user to create new place data for the place corresponding to the trigger. The place corresponding to the trigger is, in most embodiments, the place where the device is physically located when the trigger is detected as determined by a position-determining subsystem on the device such as, for example, a GNSS (GPS) receiver, WPS subsystem, cell signal radiolocation subsystem, etc.

The term "explicit trigger" means an input received by the device via a user input device (keypad, keyboard, touch-screen, jog pad, etc.). An explicit trigger is predefined or predetermined user input that the device is programmed to recognize as a user command to mark a new place. Examples of explicit triggers are a voice command (e.g. "Mark this place"), a gesture (e.g. an X), a dedicated key (hotkey), and a combination or sequence of keys (e.g. P-L-C, SHIFT P-L-C, Alt-P, etc.). In one embodiment, the mobile device may be configured via device configuration parameters or settings to enable the user to define implicit and explicit triggers. In one embodiment, the mobile device may provide a configuration screen where the user can configure the trigger(s) for marking the place. Each of the marked places implicitly/explicitly should contain the metadata that links to the action (user input or user activity) that triggers the creation of the place. In one specific embodiment, the different triggers can be denoted in the list of marked places by different icons. Clicking on an item in the list will open the place detail view with the option for the user to access the content (photo, video, voice memo, text message, phone call, etc) of the corresponding activity that triggers the implicit place creation.

The term "implicit trigger" means a data condition that is detectable by the device that determines when prescribed data satisfies a criterion (or criteria) and causes the device to automatically create new place data or automatically suggest to the user that the user may wish to create new place data. Unlike explicit triggers, implicit triggers are inferred by the device from the user's activity (e.g. usage patterns, context, and/or behaviour). Examples of implicit triggers include taking a picture, creating a video, creating a voice memo, placing or receiving a phone call, placing or receiving a phone call to or from a specific person, sending or receiving a text message, sending or receiving a text message to and from a specific person, initiating a chat session, performing a location-based search, viewing a search result, and touching a location on a map. Depending on the context and usage patterns, this user activity may be inferred to constitute an implied request to create new place data.

Implicit triggers may be configured based on attributes of the user's activity: the number of photos taken, the length of the phone call, the length of the voice memo, the time spent consulting a website of a search result, etc. In some applications, the attributes of the user's activity may be determined based on metadata.

Implicit triggers may be refined or honed by enabling the device to learn how the user acts in various situations or circumstances. The device may employ an artificial learning (Al) algorithm to learn how the user acts in various situations, thus developing over time a corpus of data representing usage patterns or behaviour. For example, the mobile device may learn that the user tends to create places when traveling during daytime/business hours but never on the weekends or holidays (or vice versa). The time and/or location may also be factors in whether an activity should give rise to an implicit trigger. For example, unusually frequented locations on holidays (e.g. Christmas, Easter, etc.) may be inferred to be special and thus potentially worthwhile creating as new places or suggesting as new places to for the user to create.

The mobile device may learn user behaviour by observing circumstances in which explicit triggers are received. For example, the device may learn that the user frequently creates (using an explicit trigger) a new place in certain contexts, environments, locations, times, or when certain behaviours or activity are exhibited (such as using certain applications, consulting certain web sites, interacting with social networks, etc.). Some examples of these types of implicit triggers are visiting a new city, a new province or state, a new country, spending more than a predetermined time in a geographical location, or taking more than a predetermined number of photos at a location. Other implicit triggers may be based on extracting content or inferring user impressions from messages, posts, etc. (e.g. from e-mails, SMS, MMS, IM, tweets, Facebook® posts, etc.). The content of these messages may suggest that the location is interesting, remarkable or memorable to the user and thus worth creating as a new place (e.g. "I love this place!", "This beach is awesome!", etc.).

Detection of the implicit trigger may also occur after the device has departed the location. In other words, detection of the implicit trigger may occur at the place to be created or at another location. For example, after a day of sightseeing, the user may send photos to family or friends or may upload photos to a social networking site like Facebook® or to a photo-sharing site like Flickr®. The mobile device may then detect that the location visited earlier that day may be a place worthwhile creating as a new place. The place may be identified by consulting the location metadata for the photo that has been sent, shared or uploaded.

Some specific examples are now presented to illustrate the use of explicit and implicit triggers for creating new place data.

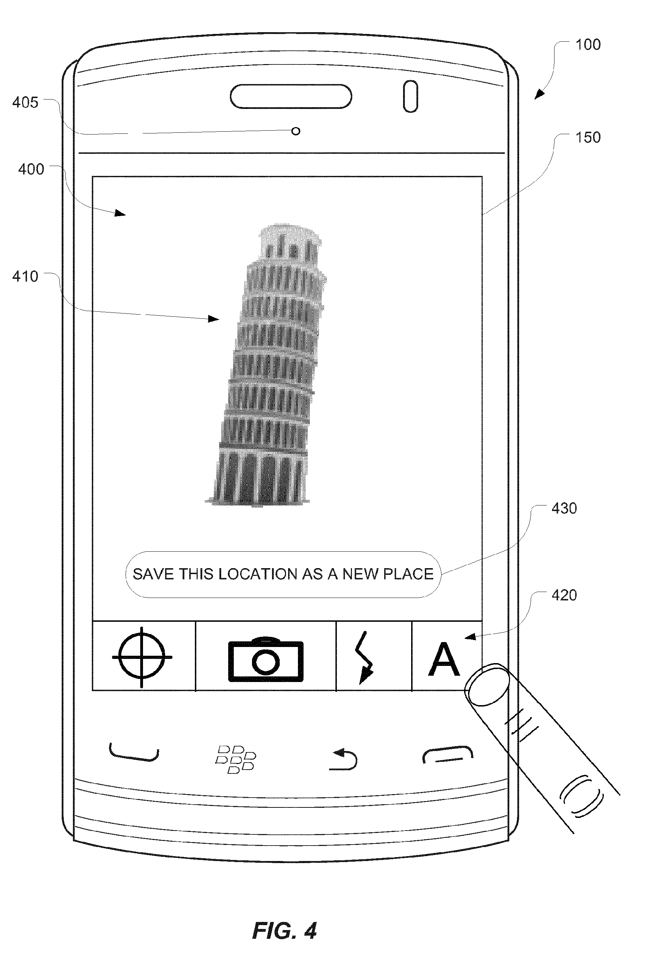

In one example implementation, the place-marking trigger is a signal from a digital camera on the mobile device 100 that a digital photograph (or sequence of photos or a video) has been taken using the digital camera on the mobile device. FIG. 4 depicts a mobile device 100 displaying a camera application interface 400 for operating a digital camera 405. The camera application 400 displays a dynamic image 410 of what is seen through the lens of the camera and then a static image of the digital photo after the photo has been taken. The camera application 400 presents virtual camera controls 420. An explicit or implicit trigger detected by the mobile device may cause a user-selectable interface element 430 to be displayed to prompt the user to respond with user input (e.g. touch input) to save the current location as a new place, i.e. to create new place for the place. In this example, the landmark is the Leaning Tower of Pisa in Italy. The mobile device may be configured to display the interface element 430 in response to an explicit trigger (e.g. voice command) or an implicit trigger (taking the photo). In another embodiment, the implicit trigger may be the machine vision recognition of a landmark. In other words, the mobile device may recognize famous landmarks or points of interest, e.g. by machine vision or by other techniques like reverse geocoding a GIS database. The implicit trigger may also be the detection that the device has never been located at that location before, e.g. by comparing GPS coordinates against a travel log stored in memory. If the device has never been to Pisa, then the mobile device infers that the location may be worthwhile creating as a new place.

If the user provides affirmative input to create the new place, then the mobile device creates new place data for the place "Leaning Tower of Pisa" (or the place "Pisa"). Alternatively, as noted above, the implicit trigger may be the taking of more than a predetermined number of photos within a predetermined period of time or within a predetermined radius. Alternatively, the implicit trigger may be a photo taken in a geographical location that the user has not visited within a prescribed period of time. The device may recognize that the user is traveling in Italy for the first time. If the user stops at a destination for more than a predetermined period of time (e.g. more than 5 minutes, 10 minutes, 30 minutes, or other user-configurable amount of time.) and then takes a picture, creates a video, creates a voice memo, the device may infer that the place has significance or meaning to the user and thus creates a place. Creating a place may automatically create the data or it may prompt the user to confirm that the place is to be created. As another alternative, the device infers that the place should be created if two or more actions are taken, e.g. take a photo and then e-mail the photo.

In another implementation, the place-marking trigger requires that multiple signals be received from the digital camera indicating that multiple digital photographs have been taken at the same location. The mobile device determines if a number of photographs exceeds a predetermined minimum number of photographs and, if so, the mobile device then creates new place data, i.e. only if the number of photographs exceeds the minimum number. For example, the trigger may have a threshold requiring that a minimum number of photographs be taken at the same location. Taking a photo at the same location means that the photos are taken within a predetermined radius or distance, within a geo-fenced area, within the boundaries of a predetermined geographical entity (city, county, state, country, etc.) or of the same landmark or object. For example, the trigger may require that at least two photos be taken, or at least three photos be taken, etc. The number of photos may be set by the user in a settings and options page. As noted above, the trigger may be the recording of a video.

Creating the place data may be done automatically and without user input or user intervention in response to the trigger. Alternatively, creating the place data may comprise presenting a prompt (e.g. displaying a query onscreen) and receiving user input (e.g. touch input or voice input) in response to the prompt to confirm that place data is indeed to be created. The mobile device may be user-configured in an options and setting page to automatically create the new place data in response to the trigger or to prompt the user to confirm that new place data is to be created.

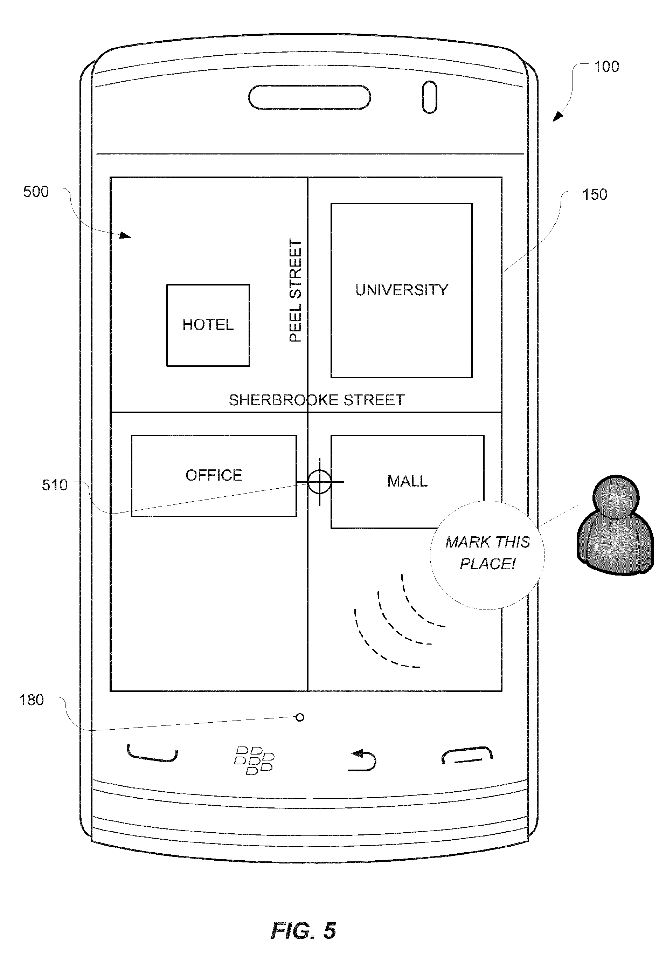

In another implementation, the place-marking trigger is a voice command comprising a predetermined word or phrase, e.g. "Mark this place", "Create Data for this Place", "Save this Place", etc. FIG. 5 is a depiction of a mobile device 100 creating new place data in response to a voice command received by the mobile device. In this example, the mobile device is executing a map application that is displaying a map 500 on the display 150 of the mobile device 100. In this example, a current location graphical indicator 510 is displayed to show the current location of the mobile device on the map. A microphone 180 receives sound signals from the user's voice command. An analog-to-digital converter (ADC) converts the sound into a digital voice signal. A voice recognition subsystem, which may be a DSP implemented as a software component executed by the processor of the mobile device, digitally processes the digital voice signal to determine if the voice command is one of a predetermined set of voice commands that are recognized by the mobile device as a place-marking trigger. If so, the mobile device creates new place data for the place corresponding to the current location of the mobile device. The voice command may be used in conjunction with other applications. The mobile device does not need to execute the map application or display a map. The voice command may be received while the device is executing and displaying a web browser, a communication application such as an e-mail application, an instant messenger, a social networking application, etc., or any other application. The mobile device may receive the voice command when no application is executing other than the operating system or when only the home screen is being displayed. The location may be a current location determined using a position-determining subsystem. In other embodiments, the location may be a location identified, selected or picked by the user. For example, the location may be defined by user input selecting a point on a map, by entering an address, coordinates, etc.

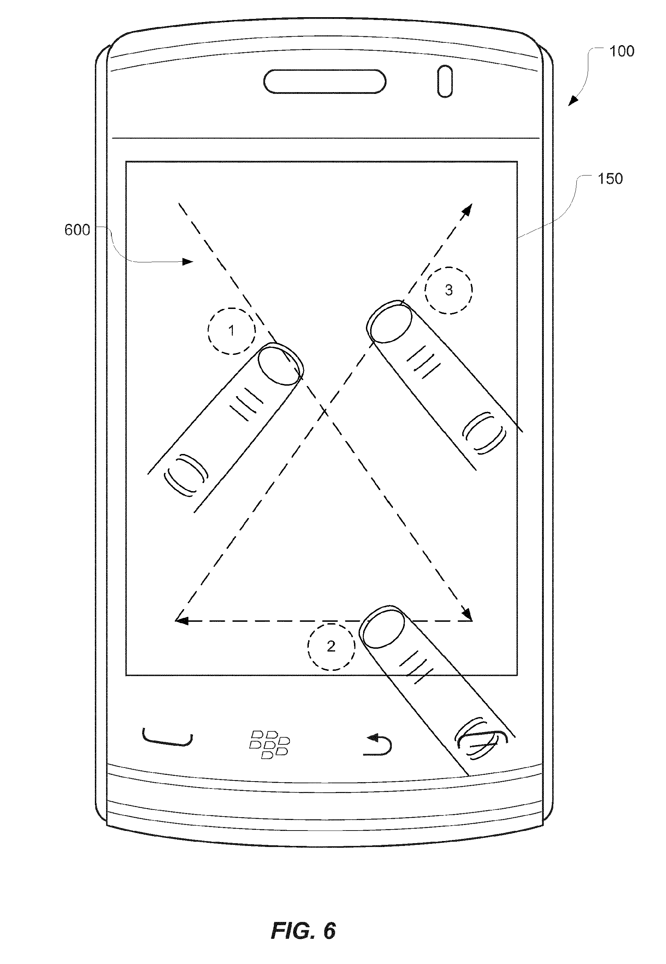

In another implementation, as illustrated by way of example in FIG. 21, the place-marking trigger is a predetermined gesture on a user interface of the mobile device. FIG. 6 is a depiction of a mobile device 100 creating new place data in response to a predetermined gesture 600 recognized by the mobile device. In FIG. 6, the gesture is an X (i.e. to suggest "X marks the spot"). The gesture may be user-defined by recording a customized gesture using a gesture-defining option.

The gesture may be a gesture performed using a cursor or pointer recognizable by the user interface in conjunction with the processor, a touch gesture recognizable by a touch-sensitive user interface in conjunction with the processor, or a contactless three-dimensional gesture recognizable by a contactless gesture recognition subsystem, etc.

Other place-marking triggers may be utilized to signify that place-related data for a place should be created and stored. These triggers may include: connection to a Wi-Fi™ router or hotspot; NFC pairing with another NFC transceiver, Bluetooth® pairing with another device, checking in to an establishment or POI in a social network application. A mobile credit card or debit card transaction to a point of sale (POS) terminal may also be an implicit trigger. In a variant, repeated transactions at the same POS can implicitly trigger the creation of place data, suggesting that the restaurant, shop, hotel, movie theatre, etc. is a meaningful place to the user. A travel application or a calendar application may be mined to obtain destination information which can be another trigger for a place.

In other embodiments, co-triggers (requiring two or more triggers to be received simultaneously or within a predetermined period of time of one another or in a predetermined sequence) may also be utilized. For example, the co-triggers may be a voice command received after the camera on the device has taken a photo and while the device is still displaying a camera application interface onscreen.

Identifying the place corresponding to the location may in some embodiments require that the mobile device identify nearby places and obtain user input selecting one of the nearby places. For example, a user of the mobile device may trigger the creation of new place data e.g. by taking a photograph, performing a gesture or speaking a voice command when in the middle of a city where there may be multiple potential places of interest. For example, there may be multiple landmarks of Points of Interest (POIs) nearby and it may not be apparent which one is relevant to the user. In other words, there may be restaurants, hotels, cafes, car rental agencies, subway or metro stations, etc., any one of which may be the place that has special meaning or importance to the user. The device must determine which of these potential places is of interest to the user. The granularity of the place is also variable. For example, a user may wish to define a new place at a country or nation level, a state or province level, a city, town or municipality level, a district or borough level, a neighbourhood level, an intersection level, a street address level, or even an apartment, room or suite level, etc.

Accordingly, the method of creating place data may optionally entail further steps of identifying nearby places (as potential place candidates), displaying a list of the nearby places (potential place candidates), receiving user input identifying a selected place (i.e. selecting one of the places), and creating the new place data for the selected place. Instead of a list, the nearby places that are potential place candidates may be displayed on a map or presented in any other suitable fashion.

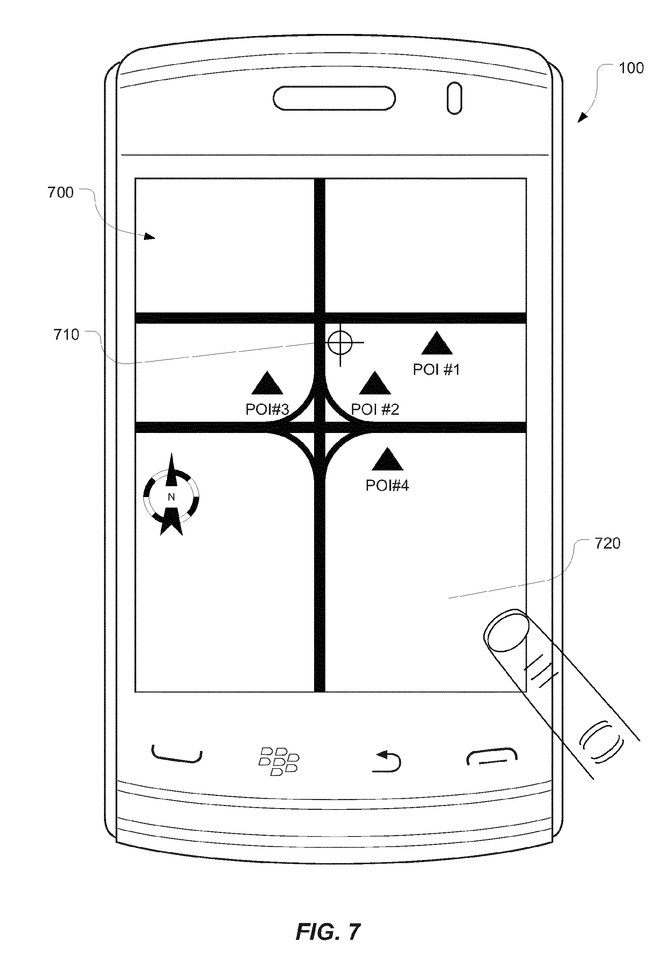

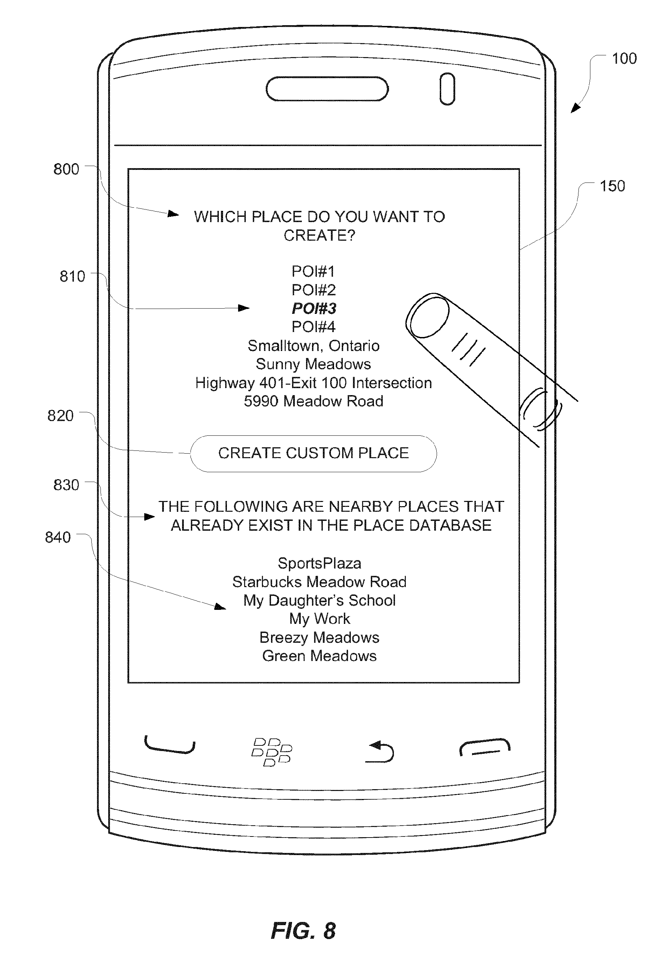

FIGS. 7 and 8 illustrate the foregoing aspect by way of an example. FIG. 22 is a depiction of a mobile device 100 displaying a map 700 of the current location 710 of the mobile device. Nearby the current location 710 are four POIs which are denoted generically as POI#1, POI#2, POI#3 and POI#4 in this example. In response to receiving a trigger, the mobile device determines whether the place corresponding to the current location is POI#1, POI#2, POI#3 or POI#4. Additionally, the mobile device may determine whether it is the city or intersection that is of interest to the user instead of the POIs.

FIG. 8 is a depiction of the mobile device 100 displaying a list 800 of potential new places 810 for which new place data may be created. This list includes the nearby POIs (POI#1, POI#2, POI#3 and POI#4). The list optionally also indicates geographical entities of varying granularity, e.g. city ("Smalltown, Ontario"), district or neighbourhood ("Sunny Meadows"), intersection ("Highway 401-Exit 100 Intersection"), and street address ("5990 Meadow Road"). Optionally, the device 100 presents a user-selectable interface element 820 which responds to user input to create a custom place (e.g. by receiving textual input) if none of the places identified by the device in the list is the place that the user wishes to create.

As illustrated by way of example in FIG. 8, the mobile device optionally also displays a list 830 of any nearby places 840 that already exist in the place data store (e.g. "SportsPlaza", "Starbucks Meadow Road", "My Daughter's School", "My Work", "Breezy Meadows" and "Green Meadows"). The user may wish to create a new place or simply to add data to an existing place. Optionally, the mobile device may be configured by the user to only suggest the generation or creation of a new place entry (as opposed to adding to an existing place entry) if there is a minimum user-reconfigurable distance (e.g. 10 meters, 100 meters, etc.) from the closest pre-existing place for which place data already exists. This will preclude the creation of overlapping or redundant places in the place data store. For example, the user may have already created or defined a place at the north entrance of his or her favourite mall. If the user is at the south entrance of the same mall, the user may not necessarily wish the device to create a separate place entry for the south entrance of the mall but rather to recognize that the north and south entrances are related to the same entity (the mall) and thus to treat these as the same place.

In another optional embodiment, the mobile device may provide a function to consolidate two discrete places for which there are two distinct place data entries in the place data store into a single consolidated place. Similarly, another optional feature enables the user to split or divide a place into two or more places. For example, a user may visit a city and wish to create a generic place entry for that city. On subsequent visits, the user may wish to divide the place into neighbourhoods or to split off a favourite landmark, point of interest, hotel, restaurant, etc.

Although FIG. 8 shows a mobile device that presents a list of potential places from which the user selects one of the places as the selected place, in another embodiment the device automatically selects one of the nearby places without user intervention or user input based on rules, settings, preferences, personal profile, user behaviour, social graph, or any combination thereof.

Once the new place data for the new place has been created in the place database, the mobile device user can do various things with that data. The data may be used by other applications on the device, shared with other users, or uploaded to a server for further processing or use.

Any of the methods disclosed herein may be implemented in hardware, software, firmware or any combination thereof. Where implemented as software, the method steps, acts or operations may be programmed or coded as computer-readable instructions and recorded electronically, magnetically or optically on a fixed or non-transitory computer-readable medium, computer-readable memory, machine-readable memory or computer program product. In other words, the computer-readable memory or computer-readable medium comprises instructions in code which when loaded into a memory and executed on a processor of a computing device cause the computing device to perform one or more of the foregoing method(s).

A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

This invention has been described in terms of specific embodiments, implementations and configurations which are intended to be exemplary only. Persons of ordinary skill in the art will appreciate, having read this disclosure, that many obvious variations, modifications and refinements may be made without departing from the inventive concept(s) presented herein. The scope of the exclusive right sought by the Applicant(s) is therefore intended to be limited solely by the appended claims.

## Claims

1. A method, performed by a mobile device, of creating place data, the method comprising:
detecting a place-marking trigger by the mobile device;
in response to the trigger, determining current location data for a current location of the mobile device;
determining if the current location corresponds to a place for which place data already exists in a place data store;
if the place data store does not contain any place data corresponding to the current location, creating new place data for the place corresponding to the current location;
if the place data store contains place data corresponding to the current location, updating the place data; and
transferring the place data to the place data store.

2. The method as claimed in claim 1 wherein detecting the place-marking trigger comprises receiving an explicit trigger based on predetermined user input.

3. The method as claimed in claim 1 wherein detecting the place-marking trigger comprises detecting an implicit trigger based on user activity.

4. The method as claimed in claim 2 wherein receiving the explicit trigger comprises receiving one of a voice command, gesture and user input on a predetermined key or combination keys.

5. The method as claimed in claim 3 wherein detecting the implicit trigger comprises detecting one of a photo or video being taken, a voice memo being created, a search result being viewed, a map location being viewed, the map location being touched, a mobile payment being made, a phone call being made or received, a phone call being made to or received from a specific person, a text message being sent or received, a text message being sent to and received from a specific person, and a chat session being initiated.

6. The method as claimed in claim 3 wherein detecting the implicit trigger comprises one of: observing a context in which a user provides explicit triggers, extracting content from messages sent by the device, determining if the device is visiting a new geographical area, and recognizing a landmark in a photo or video captured using the device.

7. The method as claimed in any one of claims 1 to 6 further comprising:
identifying nearby places;
displaying a list of the nearby places;
receiving user input identifying a selected place; and
creating the new place data for the selected place.

8. The method as claimed in any one of claims 1 to 7 further comprising presenting a configuration screen, receiving user input via the configuration screen, and configuring one or both of an implicit trigger and an explicit trigger.

9. A computer-readable medium comprising instructions in code which when loaded into a memory and executed by a processor of a mobile device cause the mobile device to perform the method of any one of claims 1 to 8.

10. A mobile device comprising:
a user interface for receiving a place-marking trigger;
a processor operatively coupled to the memory for causing, in response to the trigger, a position-determining subsystem to determine a current location of the mobile device;
the processor being configured to:
determine if the current location corresponds to a place for which place data already exists in a place data store and,
if the place data store does not contain any place data corresponding to the current location, to create new place data for the place corresponding to the current location, whereas if the place data store does contain place data for the current location, to update the place data, and
to transfer the place data to the place data store.

11. The mobile device as claimed in claim 10 wherein the place-marking trigger is an explicit trigger based on predetermined user input.

12. The mobile device as claimed in claim 10 wherein the place-marking trigger is an implicit trigger based on user activity.

13. The mobile device as claimed in claim 11 wherein receiving the explicit trigger comprises receiving one of a voice command, gesture and user input on a predetermined key or combination keys.

14. The mobile device as claimed in claim 12 wherein detecting the implicit trigger comprises detecting one of a photo or video being taken, a voice memo being created, a search result being viewed, a map location being viewed, the map location being touched, a mobile payment being made, a phone call being made or received, a phone call being made to or received from a specific person, a text message being sent or received, a text message being sent to and received from a specific person, and a chat session being initiated.

15. The mobile device as claimed in claim 12 wherein detecting the implicit trigger comprises one of: observing a context in which a user provides explicit triggers, extracting content from messages sent by the device, determining if the device is visiting a new geographical area, and recognizing a landmark in a photo or video captured using the device.
